# EUROPÄISCHE PATENTSCHRIFT

(11) **EP 1 216 580 B1**
(45) Veröffentlichungstag und Bekanntmachung des Hinweises auf die Patenterteilung: **20.07.2005**
(21) Anmeldenummer: 00975822.8
(22) Anmeldetag: 29.09.2000
(51) Int. Cl.: H04Q 1/14

(54) **VERTEILEREINRICHTUNG FÜR EINE TELEKOMMUNIKATIONSANLAGE**
DISTRIBUTION DEVICE FOR A TELECOMMUNICATIONS SYSTEM
DISPOSITIF DISTRIBUTEUR POUR UN SYSTEME DE TELECOMMUNICATION

(30) Priorität: 30.09.1999 DE 19947086
(43) Veröffentlichungstag der Anmeldung: 26.06.2002
(73) Patentinhaber: CCS Technology, Inc., Wilmington, DE 19803 (US)
(72) Erfinder: DESCY, Jack, Brighton, VIC 3186 (AU); ZIMMER, Rainer, 58579 Schalksmühle (DE); HORN, Tom, Rowville, VIC 3178 (AU); BREUER, Mike, 56065 Hamm (DE); NATH, Torsten, 10367 Berlin (DE)
(74) Vertreter: Sturm, Christoph, Dipl.-Ing.
(86) Internationale Anmeldenummer: PCT/DE2000/003476
(87) Internationale Veröffentlichungsnummer: WO 2001/024540

(56) Entgegenhaltungen:
- FR-A- 2 587 832

## Beschreibung

Die Erfindung bezieht sich auf eine Verteilereinrichtung für eine Telekommunikationsanlage, wobei ein Kontaktbauteil der Verteilereinrichtung mit Steckzungen zumindest eines Schutzsteckers kontaktierbar ist, wobei das Kontaktbauteil mit Reihen von Kontaktteilen zum Anschließen und Verbinden von elektrischen Leitungen versehen ist, wobei in das Kontaktbauteil parallel zur Reihenrichtung der Kontaktteile ein Erdungsstreifen eingesetzt ist, der mit Erdkontakten des Schutzsteckers federnd kontaktierbar ist.

Eine derartige Einrichtung ist z.B. durch die DE 39 21 227 A1 bekannt geworden. Danach ist der Erdungsstreifen als glatter Blechstreifen ausgebildet, der in einen Aufnahmeschlitz des Kontaktbauteils eingelegt ist. Die abgewinkelten Enden des Erdungsstreifens sind an den schmalen Stirnseiten des Kontaktbauteils durch dieses hindurchgeführt und mit einem kanalartigen geerdeten Trägerteil für die Kontaktbauteile kontaktiert. Die Schutzstecker weisen getrennte Steckzungen für die Erdkontakte und die Funktionskontakte auf, die mit den Anschlußelementen für die elektrischen Leitungen verbindbar sind. Die Erdkontakte der Schutzstecker sind als Blechteile ausgebildet, die an ihren freien Steckerenden in sich zurückgebogen sind und unter federnder Vorspannung am Erdungsstreifen anliegen.

Der Erfindung liegt die Aufgabe zugrunde, die Stecksicherheit zu erhöhen und den konstruktiven Aufwand bei den Schutzsteckern zu verringern.

Diese Aufgabe wird durch die Erfindung gemäß Aufgabe 1 gelöst. Da nun die Federwirkung nicht mehr den Erdkontakten der Schutzstecker zugeordnet ist, sondern dem Erdungsstreifen, kann der Schutzstecker mit nicht federnden Erdkontakten versehen werden, was die konstruktive Gestaltung des Schutzsteckers erheblich vereinfacht. Die Erdkontakte können nun z.B. ebenso wie die Funktionskontakte als einfache Leiterbahnen einer Leiterplatte ausgebildet sein, auf der die Schutzbausteine des Schutzsteckers gehalten und kontaktiert sind. Auf die stanztechnische Ausformung und die separate Montage von Blechkontaktteilen kann daher verzichtet werden. Die Bestückung der Leiterplatten mit den Schutzbausteinen erfolgt in automatisierten Handhabungsmaschinen mit geringem Aufwand.

Im folgenden wird die Erfindung anhand eines in der Zeichnung dargestellten Ausführungsbeispieles näher erläutert.
- Figur 1: zeigt eine bedienungsseitige Frontansicht eines Kontaktbauteils zum Anschließen und Verbinden von ankommenden und abgehenden elektrischen Leitungen,
- Figur 2: einen Schnitt durch das Kontaktbauteil entlang der Linie II/II in Figur 1,
- Figur 3: eine perspektivische Ansicht eines Erdungsstreifens des Kontaktbauteils nach Figur 1.

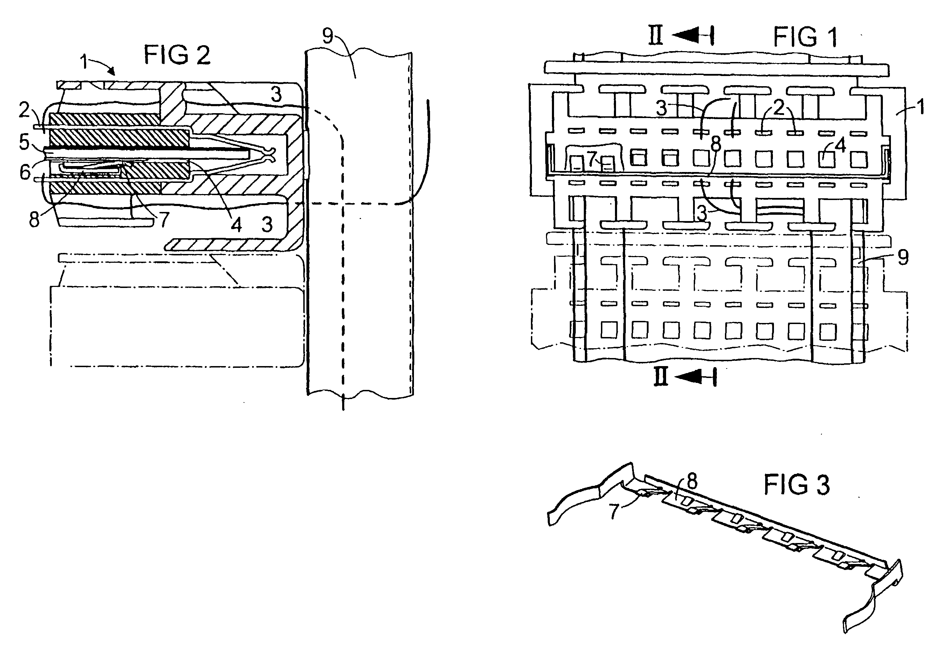

Nach den Figuren 1, 2 und 3 weist ein Kontaktbauteil 1 Anschlußelemente 2 für ankommende und abgehende elektrische Leitungen 3 auf. Die beiden Reihen von Anschlußelementen 2 bilden im Inneren des Kontaktbauteils Kontaktteile, die paarweise miteinander kontaktiert sind. Das Kontaktbauteil 1 weist ferner auf seiner Frontseite offene Stecköffnungen 4 auf, durch die Steckzungen 5 von nicht näher dargestellten Schutzsteckern 6 einsteckbar sind. Die Steckzungen 5 sind Teile einer Leiterplatte, die zu beiden Seiten mit Leiterbahnen 6 beschichtet ist.

Im Bereich der Steckzungen 5 bilden die Leiterbahnen 6 Erdkontakte für Federzungen 7 eines Erdungsstreifens 8, der entlang einer Reihe der Anschlußelemente 2 in das Kontaktbauteil 1 eingesetzt ist. Wobei die Federzungen in den Einsteckweg der Erdkontakte ragen. Die Enden des Erdungsstreifens 8 sind derartig verlängert und abgebogen, daß sie mit einem rückseitig angeordneten kanalartigen geerdeten Trägerteil 9 für die Kontaktbauteile 1 kontaktierbar sind. Die Federzungen 7 des Erdungsstreifens 8 sind am Erdungsstreifen freigeschnitten und aus dessen Einsteckebene derart herausgebogen, daß sie in die Stecköffnungen 4 des Kontaktbauteils hineinragen und dort mit den Erdkontakten der Steckzungen federnd kontaktiert sind.

## Patentansprüche

1. Verteilereinrichtung für eine Telekommunikationsanlage, mit einem Kontaktbauteil (1), welches Reihen von Kontaktteilen zum Anschließen und Verbinden von elektrischen Leitungen (3) und einen Erdungsstreifen (8) aufweist, welcher parallel zur Reihenrichtung der Kontaktteile in das Kontaktbauteil (1) eingesetzt ist, und mit wenigstens einem Schutzstecker, der Steckzungen (5) aufweist, mit denen das Kontaktbauteil (1) kontaktierbar ist, und der Erdkontakte (z.B. 6) aufweist, mit denen der Erdungsstreifen (8) des Kontaktbauteils (1) federnd kontaktierbar ist, wobei der Erdungsstreifen (8) mit freigestanzten Federzungen (7) versehen ist, die zu den festliegenden Erdkontakten (z.B. 6) der Steckzungen (5) hin abgebogen und gegenüber diesen federnd auslenkbar sind und die sich ausgehend von dem Erdungsstreifen (8) in die Einsteckrichtung des Schutzsteckers erstrecken.

2. Verteilereinrichtung nach Anspruch 1, wobei der Erdungsstreifen (8) an seinen Längsenden mit in Richtung parallel zu seinen Federzungen (7) verlaufenden Abbiegungen versehen ist, welche als Erdkontaktfedern zur Kontaktierung eines rückseitig angeordneten Trägerteils (9) vorgesehen sind.

## Claims

1. Distribution device for a telecommunications system, having a contact component (1), which has rows of contact parts for the purpose of connecting and joining electrical lines (3) and an earthing strip (8) which is inserted in the contact component (1) such that it is parallel to the direction of the rows of contact parts, and having at least one protective plug, which has plug tongues (5) by means of which contact can be made with the contact component (1), and which has earth contacts (e.g. 6) by means of which contact can be made in a resilient manner with the earthing strip (8) of the contact component (1), the earthing strip (8) being provided with stamped-free spring tongues (7) which are bent back towards the fixed earth contacts (e.g. 6) of the plug tongues (5) and can be deflected in a resilient manner with respect to said plug tongues (5) and which extend, starting from the earthing strip (8), in the insertion direction of the protective plug.

2. Distribution device according to Claim 1, the earthing strip (8) being provided at its longitudinal ends with bent-back sections, which extend in the direction parallel to its spring tongues (7) and are provided as earth contact springs for the purpose of making contact with a mounting part (9) arranged at the rear.

## Revendications

1. Répartiteur pour une installation de télécommunications, qui comprend
un composant de contact (1) qui présente des rangées de pièces de contact pour le raccordement et la liaison à des conducteurs électriques (3) et une bande (8) de mise à la terre qui est insérée dans le composant de contact (1) parallèlement à la direction des rangées de pièces de contact, et au moins une fiche de protection qui présente des bornes (5) avec lesquelles le composant de contact (1) peut être mis en contact et qui présente des contacts (par exemple 6) de mise à la terre avec lesquels la bande (8) de mise à la terre du composant de contact (1) peut être mise en contact de manière élastique,
la bande (8) de mise à la terre étant dotée de languettes élastiques (7) dégagées par estampage, qui peuvent être courbées en direction des contacts fixes (par exemple 6) de mise à la terre des bornes (5) et déviées élastiquement par rapport à ces contacts
et qui, partant de la bande (8) de mise à la terre, s'étendent dans la direction d'enfichage de la fiche de protection.

2. Répartiteur selon la revendication 1, dans lequel la bande (8) de mise à la terre est dotée à ses extrémités longitudinales de replis qui s'étendent parallèlement à ses languettes élastiques (7) et qui sont prévues comme ressorts de contact de mise à la terre pour assurer le contact avec une pièce de support (9) disposée sur le côté dorsal.
